# EUROPEAN PATENT APPLICATION

(11) **EP 4 064 143 A1**
(43) Date of publication of application: **28.09.2022**
(21) Application number: 21190500.5
(22) Date of filing: 10.08.2021
(51) Int. Cl.: G06Q 10/00, G06Q 10/10

(54) **INFORMATION PROCESSING SYSTEM, INFORMATION PROCESSING METHOD, AND PROGRAM**

(30) Priority: 26.03.2021 JP 2021054185
(71) Applicant: Fujifilm Business Innovation Corp., Tokyo 107-0052 (JP)
(72) Inventor: TSUMEMITSU, Masaya, Kanagawa, 220-8668 (JP)
(74) Representative: Parker, Andrew James

(57) **Abstract**

An information processing system includes a processor configured to: display plural instruction receiving elements each of which is provided for receiving an instruction to display a content of an operation that was performed on a document displayed on a display region; display a state of the display region at a time point corresponding to an instruction receiving element selected by a user among the plural instruction receiving elements; and display the plural instruction receiving elements in a distinguishable manner according to the content of the operation.

## Description

### BACKGROUND

### Technical Field

The present invention relates to an information processing system, an information processing method, and a program.

### Related Art

JP-A-2010-165178 discloses a process in which when an object is selected and a history display function is instructed, a snapshot including the selected object at each time point when some operation is performed on the selected object.

### SUMMARY

There is a technique of displaying, on a display screen, a past state of a display region in which a document is displayed and an image showing that an operation is performed on the document in this display region.

The image showing that an operation is performed merely shows that the operation is performed. In order to grasp a target of the operation or specific contents of the operation, it is necessary to refer to a state of the display region at a time point when the operation is performed, which is troublesome.

Aspects of non-limiting embodiments of the present disclosure relate to making it easier to grasp the content of the operation performed on the document as compared with a case where a content of a past operation performed on the document are grasped by referring only to a display region when the operation on the document is performed.
[1] According to an aspect of the present disclosure, there is provided an information processing system including a processor configured to: display plural instruction receiving elements each of which is provided for receiving an instruction to display a content of an operation that was performed on a document displayed on a display region; display a state of the display region at a time point corresponding to an instruction receiving element selected by a user among the plural instruction receiving elements; and display the plural instruction receiving elements in a distinguishable manner according to the content of the operation.
[2] In the information processing system according to [1], the processor may be configured to display the plural instruction receiving elements in a distinguishable manner according to a type of the operation.
[3] In the information processing system according to [1], the processor may be configured to display an instruction receiving element corresponding to a content of a specific operation among the plural instruction receiving elements, and to hide an instruction receiving element other than the instruction receiving element corresponding to the content of the specific operation among the plural instruction receiving elements.
[4] In the information processing system according to [1], the processor may be configured to display the plural instruction receiving elements in a distinguishable manner according to a person that performed the operation.
[5] In the information processing system according to [1], the processor may be configured to display the plural instruction receiving elements in a distinguishable manner according to an object on which the operation was performed.
[6] In the information processing system according to [5], in response to the document displayed in the display region being selected, the processor may be configured to display an instruction receiving element whose target of the operation is the selected document in a distinguishable manner.
[7] In the information processing system according to [6], the processor may be configured to further display an indication of a person that performed the operation corresponding to the instruction receiving element.
[8] In the information processing system according to [1], the processor may be configured to display, in the display region, an indication of a target document of the operation corresponding to the instruction receiving element selected.
[9] In the information processing system according to [8], the processor may be configured to display, at a portion at which the target document is displayed in the display region, an image to indicate the operation target document is a document subjected to the operation corresponding to the instruction receiving element selected as the indication of the target document of the operation.
[10] In the information processing system according to [1], the processor may be configured to display an indication of a change in a content of a target document, the target document being a document subjected to the operation corresponding to the instruction receiving element selected.
[11] In the information processing system according to [10], the processor may be configured to display, as the indication of the change in the content, information about the target document before the change in the content and information about the target document after the change in the content.
[12] In the information processing system according to [1], in response to a storage image displayed in the display region being selected by the user, the processor may be configured to display an indication of an instruction receiving element corresponding to an operation related to the storage image and an indication that an operation corresponding to the instruction receiving element is an operation related to the storage image, the storage image being an image of a storage of a document.
[13] In the information processing system according to [1], the plural instruction receiving elements may be displayed in order in a display portion based on a time point when the operation corresponding to each of the plural instruction receiving elements is performed, and, in response to a moving body that is configured to move in the display portion reaching a portion where an instruction receiving element among the plural instruction receiving elements, the processor may be configured to display the content of the operation corresponding to the instruction receiving element displayed at the portion.
[14] The information processing system according to [1], in a case where the operation corresponding to the instruction receiving element selected is an operation of moving the document displayed in the display region, the processor may be configured to display information about a movement of the document in the display region as the content of the operation corresponding to the instruction receiving element selected.
[15] According to another aspect of the present disclosure, there is provided an information processing method including: displaying plural instruction receiving elements each of which is provided for receiving an instruction to display a content of an operation that was performed on a document displayed in a display region; displaying a state of the display region at a time point corresponding to an instruction receiving element selected by a user among the plural instruction receiving elements; and displaying the plural instruction receiving elements in a distinguishable manner according to the content of the operation.
[16] According to another aspect of the present disclosure, there is provided a program causing a computer to execute a process, the process including: displaying plural instruction receiving elements each of which is provided for receiving an instruction to display a content of an operation that was performed on a document displayed in a display region; displaying a state of the display region at a time point corresponding to an instruction receiving element selected by a user among the plural instruction receiving elements; and displaying the plural instruction receiving elements in a distinguishable manner according to the content of the operation.

According to [1], comparing to a case where a content of a past operation performed on a document are grasped by referring only to a display region when the operation on the document is performed, it is possible to make it easier to grasp the content of the operation performed on the document.

According to [2], by referring to the instruction receiving elements, the type of the operation with which the instruction receiving element is associated can be grasped.

According to [3], it is easier to grasp the content of the specific operation as compared with a case where the instruction receiving elements other than each of the instruction receiving elements corresponding to the content of the specific operation is also displayed.

According to [4], it is possible to grasp the person who performed the operation with which the instruction receiving elements are associated.

According to [5], by referring to the instruction receiving elements, it is possible to grasp the object subjected to the operation with which the instruction receiving elements are associated.

According to [6], when the document displayed in the display region is selected, it is possible to grasp the instruction receiving elements for which this document is a target of the operation.

According to [7], it is possible to grasp the person who performed the operation corresponding to the instruction receiving elements.

According to [8], it is possible to clarify the document subjected to the operation corresponding to the instruction receiving elements, as compared with the case where the document subjected to the operation corresponding to the instruction receiving elements is not displayed.

According to [9], it is possible to perform a display of an image showing that it is the operation target document on the portion of the display region on which the operation target document is displayed.

According to [10], it is possible to perform a display showing a change in a content of a target document, which is a document subjected to the operation corresponding to the instruction receiving elements.

According to [11], as the display showing the change in the content of the target document, the information about the target document before the change in the content and the information about the target document after the change in the content can be displayed.

According to [12], it is possible to perform the display showing that the operation corresponding to the instruction receiving elements is the operation related to the storage.

According to [13], when the moving body reaches the display portion of each instruction receiving element, it is possible to display the content of the operation corresponding to the instruction receiving elements.

According to [14], when the operation corresponding to the instruction receiving elements is an operation of moving the document displayed in the display region, it is possible to perform a display showing the information about the movement of the document.

According to [15] or [16], comparing to a case where a content of a past operation performed on a document is grasped by referring only to a display region when the operation on the document is performed, it is possible to make it easier to grasp the content of the operation performed on the document.

### BRIEF DESCRIPTION OF DRAWINGS

Exemplary embodiment(s) of the present invention will be described in detail based on the following figures, wherein:
Fig. 1 is a diagram showing a configuration example of an information processing system;
Fig. 2 is a diagram showing an example of a hardware configuration of a server apparatus;
Fig. 3 is a diagram showing an example of a hardware configuration of a terminal apparatus;
Fig. 4 is a diagram showing a display example in a display device of the terminal apparatus;
Fig. 5 is a diagram showing an example of information accumulated in an information storage device provided in the server apparatus;
Fig. 6 is a diagram showing another display example in the display device of the terminal apparatus;
Fig. 7 is a diagram showing a past display region displayed on the display device of the terminal apparatus;
Fig. 8 is a diagram showing another display example in the display device of the terminal apparatus;
Fig. 9 is a diagram showing another display example in the display device of the terminal apparatus;
Fig. 10 is a diagram showing another display example in the display device of the terminal apparatus;
Fig. 11 is a diagram showing a display example of the display device when a storage image displayed in the past display region is selected by a user;
Fig. 12 is a diagram showing a display example of the display device when a storage image displayed in the past display region is selected by a user;
Fig. 13 is a diagram showing another display example in the display device of the terminal apparatus;
Fig. 14 is a diagram showing another display example in the display device of the terminal apparatus;
Fig. 15 is a diagram showing another display example in the display device of the terminal apparatus;
Fig. 16 is a diagram showing another display example in the display device of the terminal apparatus; and
Fig. 17 is a diagram showing another display example in the display device of the terminal apparatus.

### DETAILED DESCRIPTION

Hereinafter, an exemplary embodiment of the present invention will be described in detail with reference to the accompanying drawings.

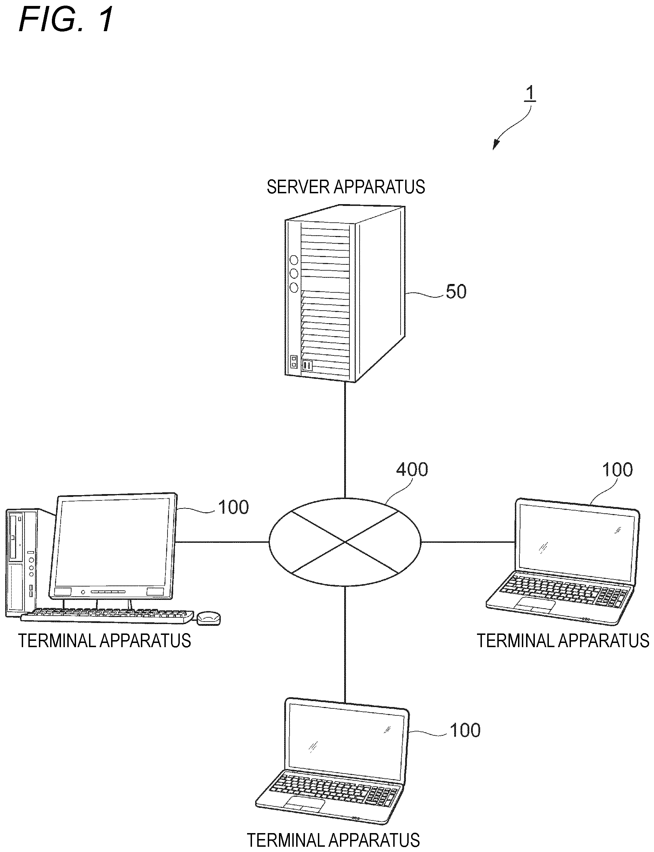

Fig. 1 is a diagram showing a configuration example of an information processing system 1 of the present exemplary embodiment.

The information processing system 1 of the present exemplary embodiment includes a server apparatus 50 and plural terminal apparatuses 100 connected to the server apparatus 50. The server apparatus 50 and the plural terminal apparatuses 100 are connected via a communication line 400 such as an Internet line. Each of the server apparatus 50 and the plural terminal apparatuses 100 includes a computer device.

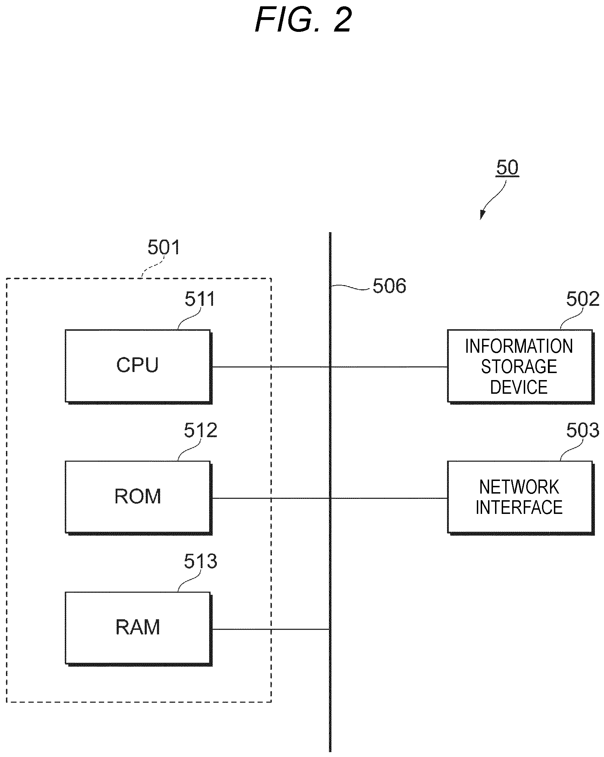

Fig. 2 is a diagram showing an example of a hardware configuration of the server apparatus 50.

The server apparatus 50 is provided with an information processing unit 501, an information storage device 502 that stores information, and a network interface 503 that realizes communication via a LAN (Local Area Network) cable, etc.

The information processing unit 501 includes a CPU (Central Processing Unit) 511 as an example of a processor, a ROM (Read Only Memory) 512 in which basic software, a BIOS (Basic Input Output System), and the like are stored, and a RAM (Random Access Memory) 513 used as a work area.

CPU 511 may be multi-core. The ROM 512 may be a rewritable non-volatile semiconductor memory.

The information processing unit 501, the information storage device 502, and the network interface 503 are connected via a bus 506 and a signal line (not shown).

Here, programs executed by the CPU 511 may be provided to the server apparatus 50 in a state of being stored in a computer-readable recording medium such as magnetic recording medium (magnetic tape, magnetic disk, and the like), an optical recording medium (optical disk, and the like), optical magnetic recording medium, semiconductor memory, and the like. In addition, the programs executed by the CPU 511 may be provided to the server apparatus 50 by using a communication unit such as the Internet.

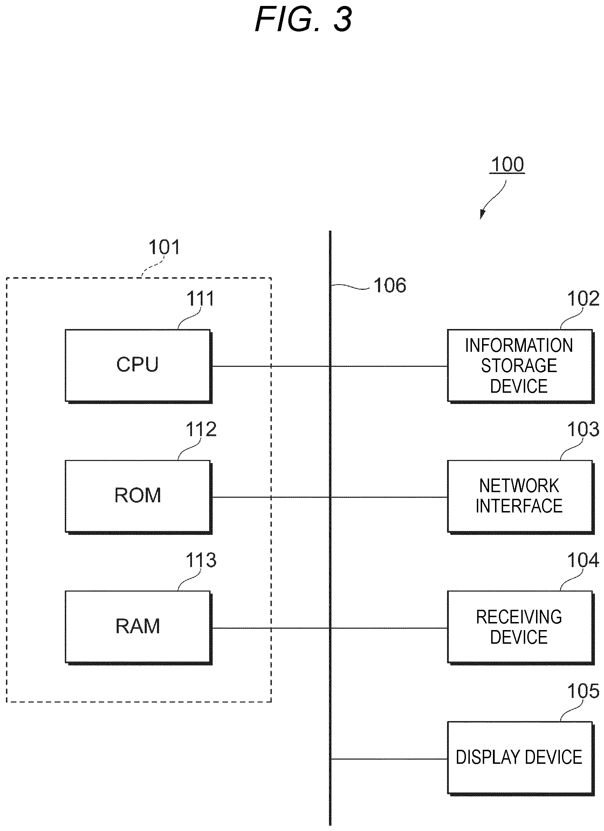

Fig. 3 is a diagram showing an example of a hardware configuration of each terminal apparatus 100.

Each of the terminal apparatuses 100 is provided with an information processing unit 101, an information storage device 102 that stores information, and a network interface 103 that realizes communication via a LAN (Local Area Network) cable, etc.

Each of the terminal apparatuses 100 is provided with a receiving device 104 that receives operations of an operator and a display device 105 that displays information.

The receiving device 104 includes devices such as a keyboard and a mouse, a touch panel, and the like, and in the present exemplary embodiment, information to be input by a user to the information processing system 1 are received by the receiving device 104.

The display device 105 includes a liquid crystal display, an organic EL display, and the like. Various screens described later are displayed on the display device 105.

The information storage device 102 is realized by an existing information storage device such as a hard disk drive, a semiconductor memory, and a magnetic tape.

The information processing unit 101 includes a CPU (Central Processing Unit) 111 as an example of a processor, a ROM (Read Only Memory) 112 in which basic software, a BIOS (Basic Input Output System), and the like are stored, and a RAM (Random Access Memory) 113 used as a work area.

CPU 111 may be multi-core. The ROM 112 may be a rewritable non-volatile semiconductor memory.

The information processing unit 101, the information storage device 102, the network interface 103, the receiving device 104, and the display device 105 are connected via a bus 106 and a signal line (not shown).

Here, programs executed by the CPU 111 may be provided to the terminal apparatus 100 in a state of being stored in a computer-readable recording medium such as magnetic recording medium (magnetic tape, magnetic disk, and the like), an optical recording medium (optical disk, and the like), optical magnetic recording medium, semiconductor memory, and the like. In addition, the programs executed by the CPU 111 may be provided to the terminal apparatus 100 by using a communication unit such as the Internet.

In the present exemplary embodiment above, the processor refers to a processor in a broad sense, and includes a general-purpose processor (for example, CPU: Central Processing Unit, etc.) or a dedicated processor (for example, GPU: Graphics Processing Unit, ASIC: Application Specific Integrated Circuit, FPGA: Field Programmable Gate Array, programmable logic device, etc.).

Operations of the processor may be implemented not only by one processor but also by cooperation of plural processors existing at physically separated positions. An order of the operations of the processor is not limited to an order described in the present exemplary embodiment, and may also be changed.

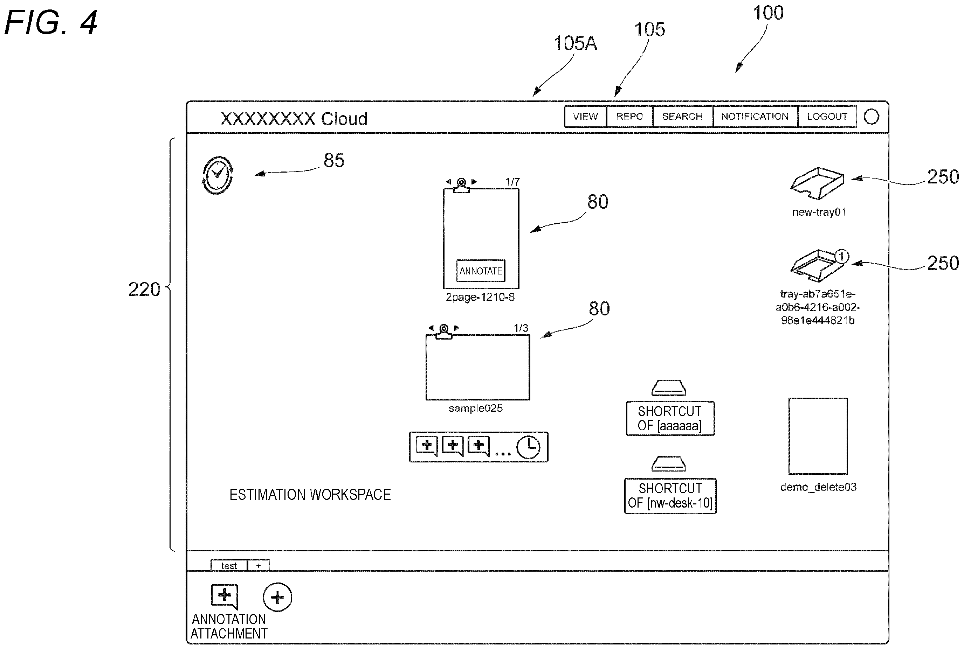

Fig. 4 is a diagram showing a display example in the display device 105 of the terminal apparatus 100.

In the present exemplary embodiment, the CPU 111 as an example of the processor provided in the terminal apparatus 100 executes programs stored in the ROM 112 or the information storage device 102 provided in the terminal apparatus 100, so that a display process described below is performed.

When the user performs a predetermined operation via the terminal apparatus 100, the CPU 111 of the terminal apparatus 100 performs a display shown in Fig. 4 on the display device 105 provided in the terminal apparatus 100.

Specifically, as shown in Fig. 4, the CPU 111 displays documents 80 (a document image which is an image representing a document) and a display region 220 on which plural documents 80 are displayed on the display device 105.

In this display example, the display region 220 is a region for the user to perform an estimation work, and the documents 80 related to the estimation are displayed in the display region 220.

In the present exemplary embodiment, the user performs an operation on each document 80 displayed in the display region 220 displayed on his / her own terminal apparatus 100 via his / her own terminal apparatus 100.

Specifically, each of the users, performs, for example, addition of the document 80 to the display region 220 displayed on his / her own terminal apparatus 100, operation on a document such as editing the document 80, movement of the document 80 to another display region 220, retrieval of the document 80 from each document storage unit, etc.

Storage images 250, which are images representing the document storage units, are also displayed in the display region 220, and in the present exemplary embodiment, the documents 80 stored in the document storage units represented by the storage images 250 may also be retrieved.

In the present exemplary embodiment, a display screen 105A shown in Fig. 4 is also displayed on the display device 105 of the terminal apparatus 100 operated by each of the other users. In the present exemplary embodiment, the plural users operate on one common display region 220.

In the present exemplary embodiment, information about operations performed by the users with respect to the documents 80 displayed on the display region 220 are accumulated in the information storage device 502 of the server apparatus 50 (see Fig. 2).

Specifically, in the present exemplary embodiment, every time the user performs an operation on documents 80 displayed in the display region 220 of the terminal apparatus 100, the information about this operation is accumulated in the information storage device 502 of the server apparatus 50.

Specifically, as the information about the operation, a time when the operation is performed, information for specifying the document 80 subjected to the operation, information about the user who performed the operation, and information about content of the operation are accumulated in the information storage devices 502 of the server apparatus 50.

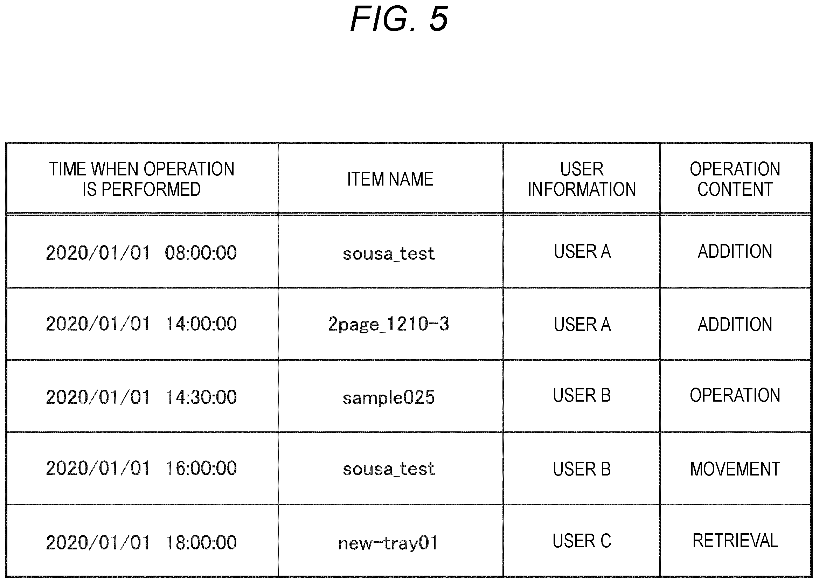

Fig. 5 is a diagram showing an example of the information accumulated in the information storage device 502 provided in the server apparatus 50.

In the present exemplary embodiment, as described above, the information about the operations performed by the users with respect to the documents 80 displayed on the display region 220 are accumulated in the information storage device 502 of the server apparatus 50.

Specifically, as shown in Fig. 5, as the information about the operations performed by the users on each document 80, the times when the operations are performed, item names as examples of the information for specifying the documents 80 subjected to the operations, the information about the users who performed the operations, and the information about the contents of the operations are accumulated in the information storage devices 502 of the server apparatus 50. Here, as the item name, information such as a file name is accumulated.

Although not shown, in the present exemplary embodiment, when an operation involving a change in a content of the document 80 is performed, information before and after the change in the content of the document 80 are accumulated, with being associated with this operation, in the information storage device 502 of the server apparatus 50.

Specifically, for example, the information about the document 80 before the change in the content of the document 80 and the information about the document 80 after the change in the content of the document 80 are accumulated in the information storage device 502 of the server apparatus 50.

In the present exemplary embodiment, when the document 80 is moved from the display region 220 shown in Fig. 4 to another display region 220, information of a movement source of the document 80 and information of a movement destination of the document 80 are accumulated in the information storage device 502 of the server apparatus 50.

Specifically, the information of the movement source of the document 80 and the information on the movement destination of the document 80 are accumulated in the information storage device 502 of the server apparatus 50 in a state of being associated with the operation of moving the document 80.

Further, in the present exemplary embodiment, as shown in Fig. 4, a selection item 85 selected by the user when the user refers to a past state of the display region 220 is displayed.

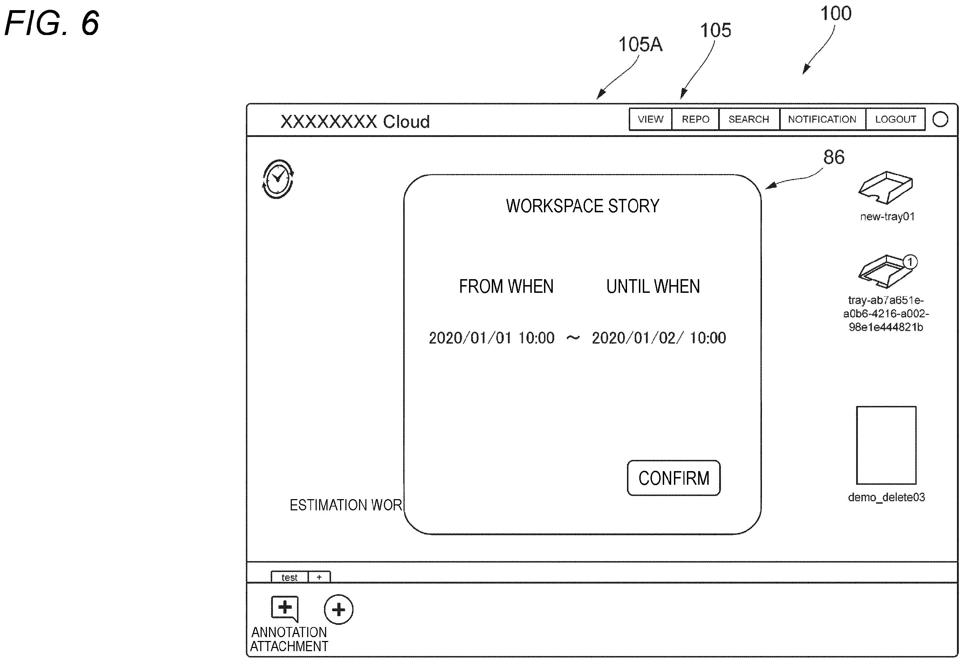

When the user selects the selection item 85, as shown in Fig. 6 (a diagram showing another display example in the display device 105 of the terminal apparatus 100), a receiving display 86, which is a display that receives the period designation, is displayed on the display device 105 of the terminal apparatus 100. In the present exemplary embodiment, the user operates the receiving display 86 to designate a period.

When the user designates a period, the CPU 111 of the terminal apparatus 100 displays a state of the display region 220 in the designated period on the display device 105 of the terminal apparatus 100. In other words, the CPU 111 displays a past state of the display region 220 on the display device 105.

More specifically, the CPU 111 acquires the past state of the display region 220 from the information storage device 502 of the server apparatus 50 to display the acquired past state on the display device 105 of the terminal apparatus 100.

In the present exemplary embodiment, in addition to accumulating the information about the operation performed by the user in the information storage device 502 of the server apparatus 50, each time a predetermined time elapses, an image of the display region 220 itself is accumulated in the information storage device 502 of the server apparatus 50.

Accordingly, in the present exemplary embodiment, the past state of the display region 220 may be displayed on the display device 105 of the terminal apparatus 100. More specifically, in the present exemplary embodiment, the state of the display region 220 during the period designated by the user may be acquired, and the acquired state may be displayed on the display device 105.

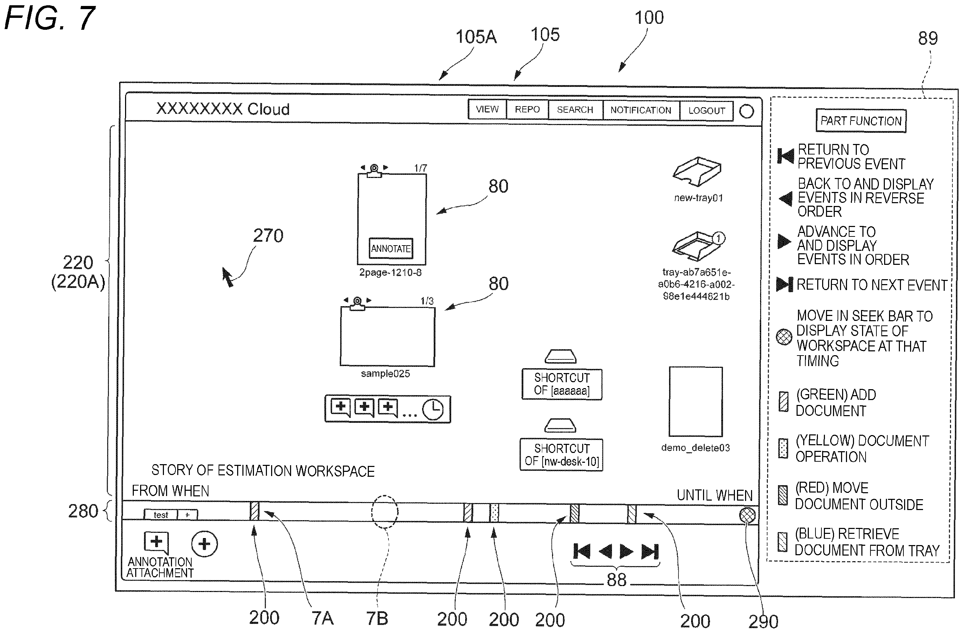

Fig. 7 is a diagram showing a past display region 220 (hereinafter, referred to as "past display region 220A") displayed on the display device 105 of the terminal apparatus 100.

In the present exemplary embodiment, as described above, when the user designates a period, the CPU 111 of the terminal apparatus 100 displays the past display region 220A in this period (hereinafter referred to as "designated period") on the display device 105.

Further, when the user designates a designated period, the CPU 111 displays plural instruction receiving elements 200, which are displays that receive instructions to display past operation contents from the user, at a lower part of the display screen 105A displayed on the display device 105. The operation content represents a content of an operation, and includes at least one of an operation type, a user who performs the operation, and a document to be operated.

More specifically, in the present exemplary embodiment, a horizontally long element region 280 that displays the instruction receiving elements 200 is provided at the lower part of the display screen 105A displayed on the display device 105, and the CPU 111 displays the plural instruction receiving elements 200 on the element region 280.

In the present exemplary embodiment, the instruction receiving elements 200 are associated with each of the past operations performed on the documents 80 displayed on the display region 220, and the instruction receiving elements 200 are displayed for each past operation performed on the documents 80 displayed in the display region 220.

In the present exemplary embodiment, when displaying the plural instruction receiving elements 200 on the element region 280, each of the instruction receiving elements 200 is displayed side by side in order based on times when operations corresponding to the instruction receiving elements 200 are performed.

In the present exemplary embodiment, a moving body 290 that moves in the element region 280 from left to right in the figure is displayed, and the moving body 290 moves from left to right according to the passage of time in the above-mentioned designated period.

In the present exemplary embodiment, it is possible to grasp how much time is passed since the start of the designated period by a position of the moving body 290.

In the present exemplary embodiment, an operation display 88 that receives an operation of fast-forwarding or returning the display in the past display region 220A from the user is displayed.

Further, in a region on a right side of the display screen 105A, an explanation 89 of each element displayed on the display screen 105A is displayed. The display of the explanations 89 does not have to be performed all the time, and may be performed according to selection of the user.

In the present exemplary embodiment, an instruction to display the past display region 220A at a specific time point is received from the user via the above-mentioned instruction receiving elements 200. In the present exemplary embodiment, when the user selects an instruction receiving element 200, the past display region 220A at the time point when the operation associated with the instruction receiving element 200 is performed is displayed.

Here, for example, it is assumed that the user moves a pointer 270 to the instruction receiving element 200 shown by a reference numeral 7A in Fig. 7, or moves the moving body 290 to this instruction receiving element 200 to select the instruction receiving element 200 shown by the reference numeral 7A.

In this case, the CPU 111 acquires, from the information storage device 502 of the server apparatus 50, the past display region 220A at the time point when the operation corresponding to the instruction receiving element 200 shown by the reference numeral 7A selected by the user is performed. Then, the CPU 111 displays the acquired past display region 220A on the display device 105 of the terminal apparatus 100.

In other words, when the user selects the instruction receiving element 200 shown by the reference numeral 7A, the CPU 111 displays a display region state, which is a state about the past display region 220 at the time point corresponding to the selected instruction receiving element 200, on the display device 105 of the terminal apparatus 100.

When the user performs an operation of selecting the instruction receiving element 200, the display region state, which is a state about the past display region 220, is displayed on the display device 105 of the terminal apparatus 100, whereby the display device 105 displays the contents of the operations performed by the user in the past.

In the present exemplary embodiment, when the user selects the instruction receiving element 200, the CPU 111 displays the display region state, which is a state of the display region 220, at the time point when the operation corresponding to the instruction receiving element 200 is performed.

Accordingly, in the present exemplary embodiment, the user may confirm the past display region 220A when the operation corresponding to the instruction receiving element 200 is performed by visually recognizing the display device 105 of the terminal apparatus 100.

In the present exemplary embodiment, even when the user selects, for example, a portion shown by a reference numeral 7B in Fig. 7, the past display region 220A at the time point of the selection is similarly displayed on the display device 105 of the terminal apparatus 100.

In other words, in the present exemplary embodiment, even when the user selects a portion of the element region 280 where the instruction receiving element 200 is not displayed, the past display region 220A at the time point of the selection is displayed on the display device 105 of the terminal apparatus 100.

Further, in the present exemplary embodiment, as shown in Fig. 7, when displaying the instruction receiving elements 200, the CPU 111 displays the instruction receiving elements 200 according to the contents of the operations with which the instruction receiving elements 200 are associated in a distinguishable manner.

More specifically, when displaying the plural instruction receiving elements 200, the CPU 111 displays the plural instruction receiving elements 200 in a distinguishable manner according to types of the operations with which the instruction receiving elements 200 are associated.

Specifically, in the present exemplary embodiment, four types are set in advance as the types of the operations.

In the present exemplary embodiment, as the types of the operations, the following four types are set in advance: addition of the document 80 to the display region 220, operations on the document 80 such as editing of the document 80, movement of the document 80 to another display region 220, and retrieval of the document 80 from the document storage unit.

When displaying the instruction receiving element 200 on the display device 105, the CPU 111 displays such that it may be understood which of these types the type of the operation corresponding to the instruction receiving element 200 corresponds to.

Specifically, the CPU 111 displays the plural instruction receiving elements 200 according to the types of the operations in a distinguishable manner by making colors of the instruction receiving elements 200 different for each type of the operations.

In this example, the instruction receiving element 200 corresponding to the addition of the document 80 is displayed in green, and the instruction receiving element 200 corresponding to the operation on the document 80 is displayed in yellow, the instruction receiving element 200 corresponding to the movement of the document 80 is displayed in red, and the instruction receiving element 200 corresponding to the retrieval of the document 80 from the document storage unit is displayed in blue.

In the present exemplary embodiment, as shown in the rightmost column of Fig. 5, the information about the contents of the operations performed by the users are accumulated in the information storage device 502 of the server apparatus 50.

The server apparatus 50 determines, when accumulating the information about the contents of the operations performed by the users in the information storage device 502, which of the above-mentioned four types the operation performed by the user corresponds to, and accumulates information about the type determined to be corresponded in the information storage device 502.

In other words, the information about the type determined to be corresponded is accumulated in the information storage device 502 as the information about the content of the operation performed by the user.

More specifically, in the present exemplary embodiment, every time the user performs an operation on the document 80, the information about the operation performed by the user is transmitted from the terminal apparatus 100 to the server apparatus 50.

The server apparatus 50 determines which of the above-mentioned four types the operation specified by the transmitted information about this operation corresponds to. Then, the server apparatus 50 accumulates the information about the corresponding type in the information storage device 502 as the information about the operation performed by the user.

In addition to accumulating the information about the type, the server apparatus 50 also accumulates information such as the time when the operation is performed, the item name, and the user information in the information storage device 502.

Here, the above-mentioned "display in a distinguishable manner" refers to a display form that enables the user to grasp the content of the operation with which the instruction receiving element 200 is associated.

As an example of the "display in a distinguishable manner", as described above, a display in which the colors of the instruction receiving elements 200 are made different for each type of the operation is mentioned. Moreover, a display in which size, shape, and pattern (design) of the instruction receiving elements 200 are made different for each type of the operation is mentioned.

As the "display in a distinguishable manner", as will be described later, a display in which some instruction receiving elements 200 are displayed and some other instruction receiving elements 200 are hidden is exemplified.

Moreover, as the "display in a distinguishable manner", a display in which the information is displayed in association with each of the plural instruction receiving elements 200 such that the user may grasp the content of the operation with which each instruction receiving element 200 is associated.

The "instruction receiving element 200" may have any shape and size as long as it is recognizable by the user.

As shown in Fig. 7, the instruction receiving elements 200 may have a shape extending in a vertical direction, and is not limited to this, and may have a shape such as a circle, an ellipse, or a polygon.

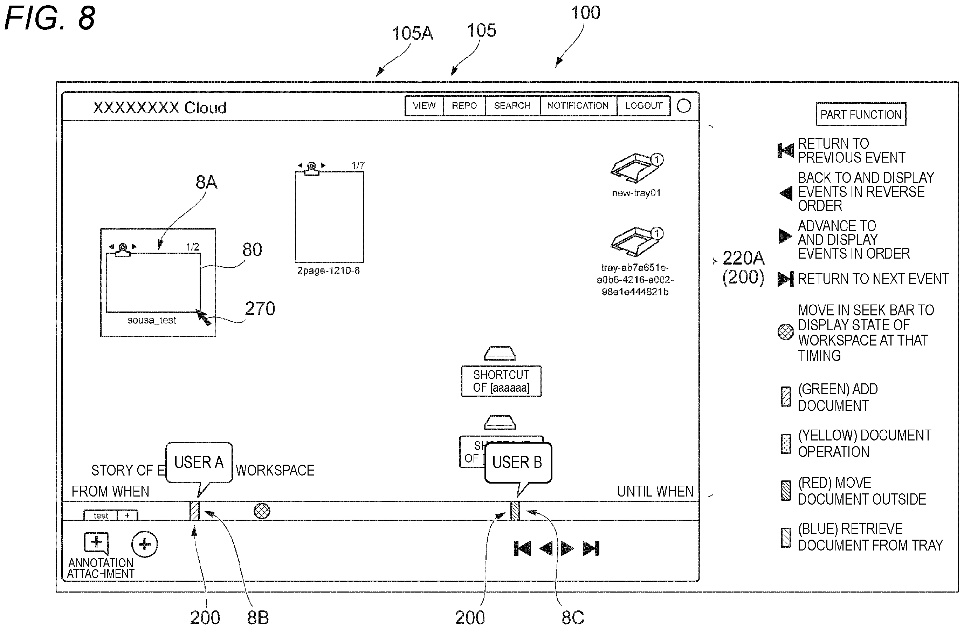

Fig. 8 is a diagram showing another display example in the display device 105 of the terminal apparatus 100.

In the display example of Fig. 8, a case where the CPU 111 displays only the instruction receiving elements 200 corresponding to specific operation contents is illustrated.

In other words, the display example shown in Fig. 8 illustrates a case where the CPU 111 performs a process of hiding the instruction receiving elements 200 other than the instruction receiving elements 200 corresponding to the specific operation contents.

Fig. 8 illustrates a case where the pointer 270 is located on the document 80, which is displayed in the past display region 220A and shown by a reference numeral 8A, and the document 80 shown by the reference numeral 8A is selected by the user.

In this case, the CPU 111 displays only the instruction receiving elements 200 shown by the reference numerals 8B and 8C, which are the instruction receiving elements 200 corresponding to the operations on the selected document 80, and hides the instruction receiving elements 200 other than the instruction receiving elements 200 shown by the reference numerals 8B and 8C.

When displaying the plural instruction receiving elements 200 in a distinguishable manner according to the contents of the operations, in this way, only a part of the instruction receiving elements 200 may be displayed, and the other instruction receiving elements 200 may be hidden.

In this display example, the plural instruction receiving elements 200 are displayed in a distinguishable manner according to the object on which the operations are performed.

In this display example, only the instruction receiving elements 200 corresponding to this document 80 are displayed according to the selection of the document 80 represented by the reference numeral 8A, and the instruction receiving elements 200 other than these instruction receiving elements 200 are hidden.

In other words, in the display example shown in Fig. 8, the instruction receiving elements 200 are distinguishable such that the user may grasp the instruction receiving elements 200 corresponding to the operations performed on the document 80 selected by the user.

Further, in this display example, information about a person who performed operations corresponding to the displayed instruction receiving elements 200 is displayed on each instruction receiving element 200.

In other words, the information about the person who performed the operations corresponding to the instruction receiving elements 200 displayed after the instruction receiving elements 200 are divided is displayed in a state of being associated with the instruction receiving elements 200.

Specifically, in this display example, "user A" and "user B" are displayed as the information about the person who performed the operations corresponding to the displayed instruction receiving elements 200.

In this example, regarding one selected document 80, user A performs an operation of adding this document 80 to the display region 220 in the past, and then user B performs an operation of moving this document 80.

By displaying the information about the "user A" and "user B", it is possible to grasp who operated the selected document 80.

Further, in this display example, similarly to the above, the color of each instruction receiving element 200 is a color corresponding to the type of operation, and by referring to the instruction receiving element 200, it is possible to grasp the types of the operations performed by each of the user A and the user B.

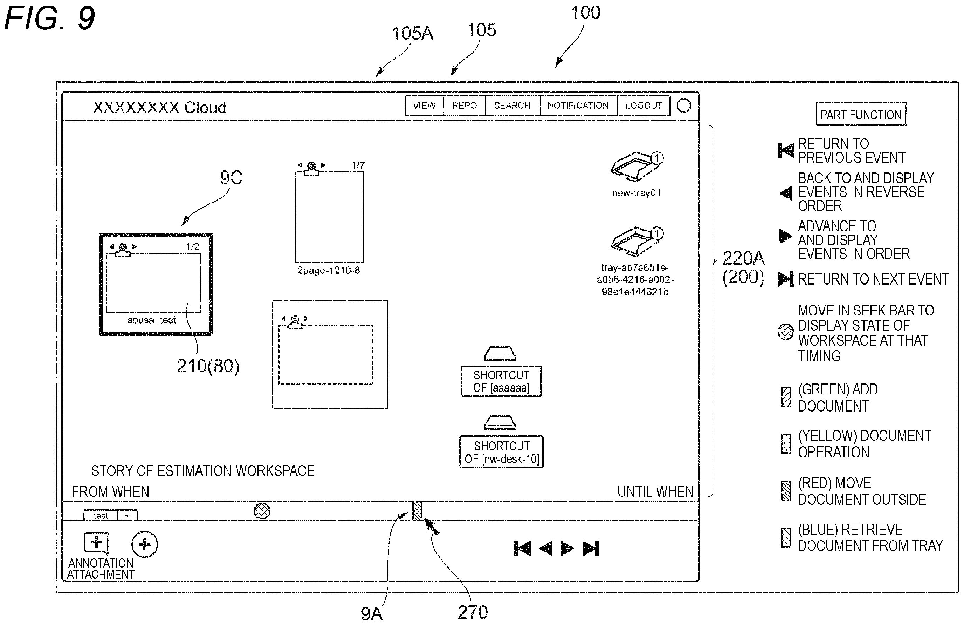

Fig. 9 is a diagram showing another display example in the display device 105 of the terminal apparatus 100.

This display example shows a case where the instruction receiving element 200 represented by a reference numeral 9A is selected by the user.

In this display example, the instruction receiving elements 200 other than the instruction receiving element 200 selected by the user is hidden.

Further, in this display example, a display showing the document 80 subjected to the operation corresponding to the instruction receiving element 200 selected by the user is performed.

Specifically, in this example, as a display showing an operation target document 210 which is the document 80 subjected to the operation, an image showing that "it is the operation target document 210" is displayed at a portion where the operation target document 210 is displayed in the past display region220A.

Specifically, in this display example, as the image showing that "it is the operation target document 210", a black frame surrounding the operation target document 210 is displayed as shown by a reference numeral 9C.

Accordingly, the user may grasp the document 80 subjected to the operation corresponding to the instruction receiving element 200 selected by the user.

In this display example as well, similar to the above, the color of the instruction receiving element 200 selected by the user is a color corresponding to the type of the operation, and the user may refer to the instruction receiving element 200 to grasp the type of the operation with which the instruction receiving element 200 is associated.

In this display example, a case where the black frame is displayed as the image showing that this is the operation target document 210 has been described as an example, but, for example, character information such as "It is the operation target document" may be displayed.

In addition, among the documents 80 displayed in the past display region 220A, only the operation target document 210 may be displayed, and the other documents 80 may be hidden.

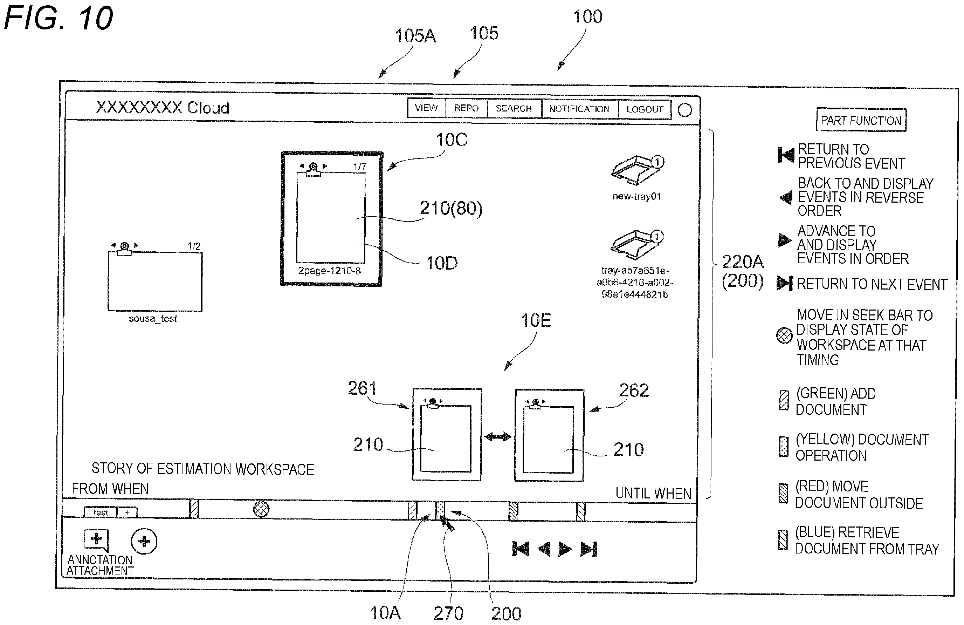

Fig. 10 is a diagram showing another display example in the display device 105 of the terminal apparatus 100.

This display example shown in Fig. 10 illustrates a case where the instruction receiving element 200 represented by a reference numeral 10A is selected by the user.

Also in this display example, as shown by the reference numeral 10C, an image showing that "it is the operation target document 210" is displayed. Specifically, also in this display example, a black frame surrounding the operation target document 210 is displayed.

Further, in this display example, the color of the instruction receiving element 200 selected by the user and shown by the reference numeral 10A is yellow. Accordingly, the user may grasp that the type of operation with which the instruction receiving element 200 selected by the user is associated is an operation on the document 80.

In this processing example, the CPU 111 performs a display showing a change in the content of the operation target document 210, which is selected by the user, subjected to the operation corresponding to the instruction receiving element 200 shown by the reference numeral 10A, and shown by a reference numeral 10D.

Specifically, as shown by a reference numeral 10E, the CPU 111 displays information about the operation target document 210 before the change in the content and information about the operation target document 210 after the change in the content as a display showing the change in the content.

Specifically, in this example, as the information about the operation target document 210 before the change in the content, an image 261 representing the operation target document 210 before the change in the content is performed (hereinafter, referred to as "pre-change image 261") is displayed.

Specifically, in this example, as the information about the operation target document 210 after the change in the content, an image 262 representing the operation target document 210 after the change in the content is performed (hereinafter, referred to as "post-change image 262") is displayed.

In the present exemplary embodiment, the pre-change image 261 and the post-change image 262 are displayed side by side.

Accordingly, the user may easily grasp the change in the content of the operation target document 210 whose content is changed.

In the present exemplary embodiment, the case where the pre-change image 261 and the post-change image 262 are displayed side by side is described as an example, but the post-change image 262 may be displayed after hiding the displayed pre-change image 261.

The pre-change image 261 and the post-change image 262 may be displayed alternately.

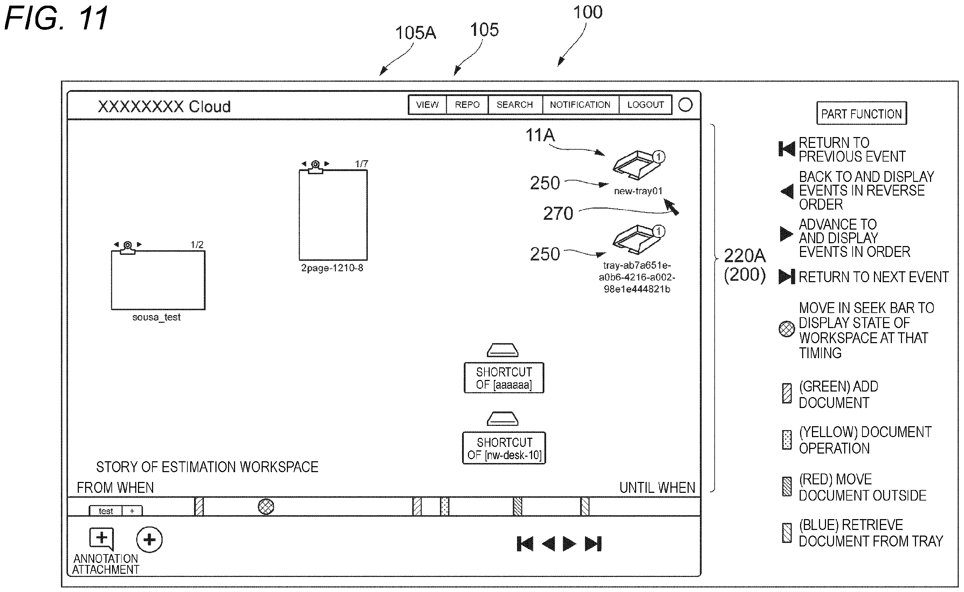

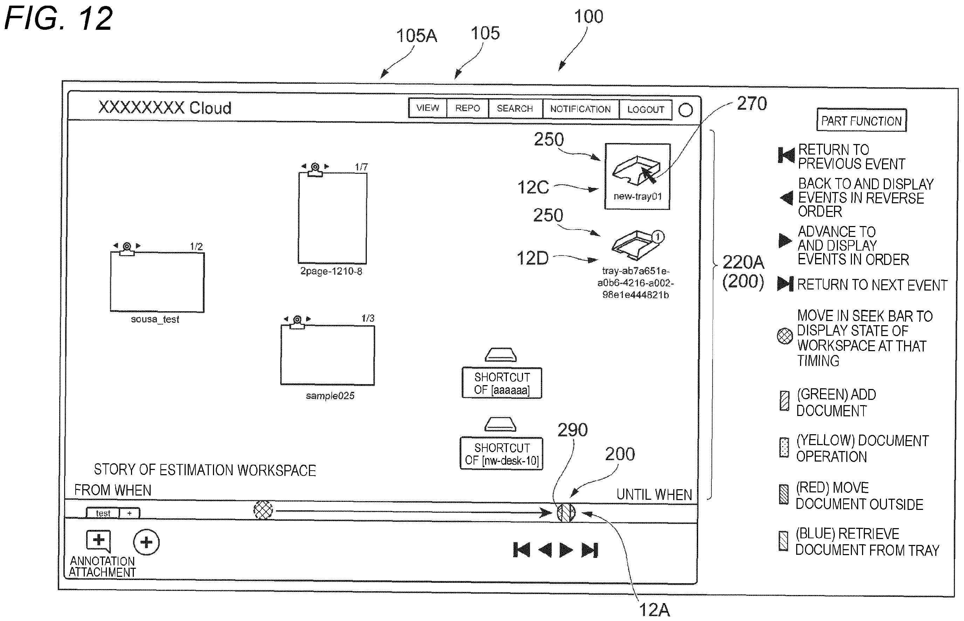

FIGS. 11 and 12 are diagrams showing a display example of the display device 105 when the storage image 250 displayed in the past display region 220A is selected by the user.

In the present exemplary embodiment, as shown in Fig. 11, the storage images 250, which are images representing the storage units of the documents 80, are displayed in the past display region 220A.

When the storage image 250 is selected by the user, in the present exemplary embodiment, a display showing the instruction receiving elements 200 corresponding to the operations related to the storage image 250 is performed, and a display showing that the operations corresponding to the instruction receiving elements 200 are operations related to the storage image 250 is performed.

Specifically, for example, when the user selects the storage image 250 shown by a reference numeral 11A in Fig. 11 from a state shown in Fig. 11, as shown in Fig. 12, the instruction receiving elements 200 other than the instruction receiving element 200, which corresponds to the operation related to the storage image 250 and is shown by a reference numeral 12A, are hidden.

Further, in this display example, when the storage image 250 shown by the reference numeral 11A in Fig. 11 is selected by the user, as shown in Fig. 12, the moving body 290 is positioned at a display position of the instruction receiving element 200, which corresponds to the operation related to the storage image 250 and is shown by the reference numeral 12A.

Accordingly, in this display example, it is possible to grasp that the operation corresponding to the instruction receiving element 200 shown by the reference numeral 12A in Fig. 12 is an operation related to the storage image 250 shown by a reference numeral 12C.

In the present exemplary embodiment, as shown by reference numerals 12C and 12D in Fig. 12, there are two storage images 250.

When the display process of the present exemplary embodiment is performed, it is possible to grasp that the operation corresponding to the instruction receiving element 200 shown by the reference numeral 12A is an operation related to the storage image 250 displayed on an upper side.

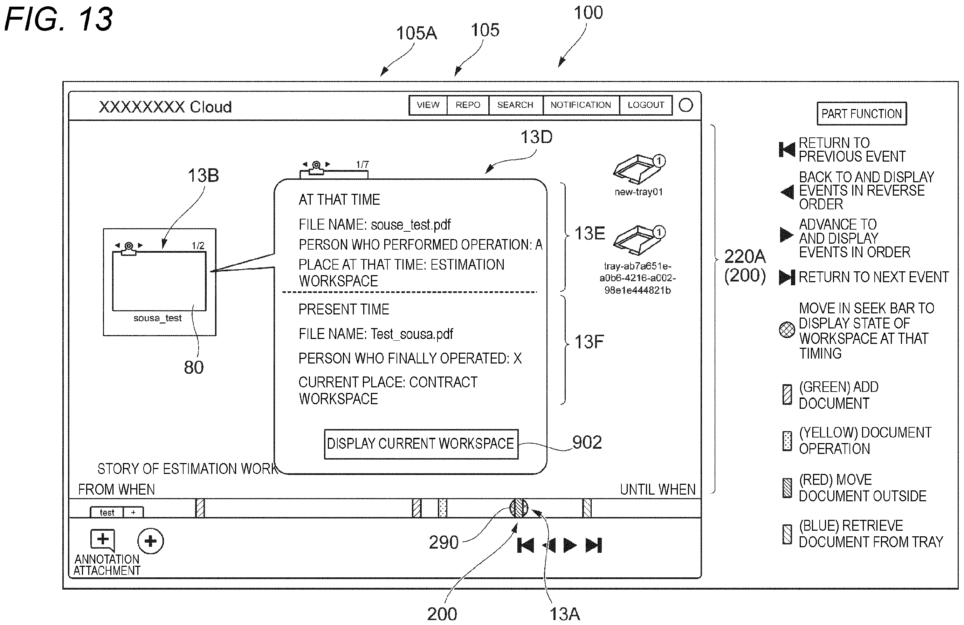

Fig. 13 is a diagram showing another display example in the display device 105 of the terminal apparatus 100.

In the present exemplary embodiment, as described above, an operation of moving the document 80 to another display region 220 is exemplified as the operations for the document 80 displayed in the display region 220.

When the operation corresponding to the instruction receiving element 200 is the operation of moving the document 80 to another display region 220, the CPU 111 performs a display showing information about the movement of the document 80 as a display showing the content of the operation corresponding to the instruction receiving element 200.

Here, for example, it is assumed that the operation corresponding to the instruction receiving element 200 shown by a reference numeral 13A in Fig. 13 is an operation of moving the document 80, which is displayed in the past display region 220A and shown by a reference numeral 13B, to another display region 220.

In this case, as a display showing the content of the operation corresponding to the instruction receiving element 200, as shown by a reference numeral 13D, a display showing the information about the movement of the document 80 shown by the reference numeral 13B is performed.

Specifically, in this example, information about the document 80 before the movement and information about the document 80 after the movement are displayed.

More specifically, in this example, as the information about the document 80 before the movement, as shown by a reference numeral 13E, a file name of the document 80 before the movement, information about the user who operates the document 80 before the movement, and information about the display region 220 on which the document 80 before the movement is displayed, are displayed.

It is clear that, in this example, information called "estimation workspace" is displayed as the information about the display region 220 on which the document 80 before the movement is displayed, and the document 80 before the movement is displayed on the display region 220 named "estimation workspace".

More specifically, in this example, as the information about the document 80 after the movement, as shown by a reference numeral 13F, a file name of the document 80 after the movement, information about the user who operates the document 80 after the movement, and information about the display region 220 on which the document 80 after the movement is displayed, are displayed.

It is clear that, in this example, information called "contract workspace" is displayed as the information about the display region 220 on which the document 80 after the movement is displayed, and the document 80 after the movement is displayed on the display region 220 named "contract workspace".

Further, in a display field in which the information about the document 80 after the movement is displayed, a selection item 902 that displays the display region 220 in which the document 80 after the movement is present is displayed.

In the present exemplary embodiment, when the user selects the selection item 902, the display region 220 in which the document 80 after the movement is present and the document 80 after the movement are displayed.

Specifically, the display region 220 called "contract workspace" and the document 80 after the movement, which is present in the "contract workspace", are displayed.

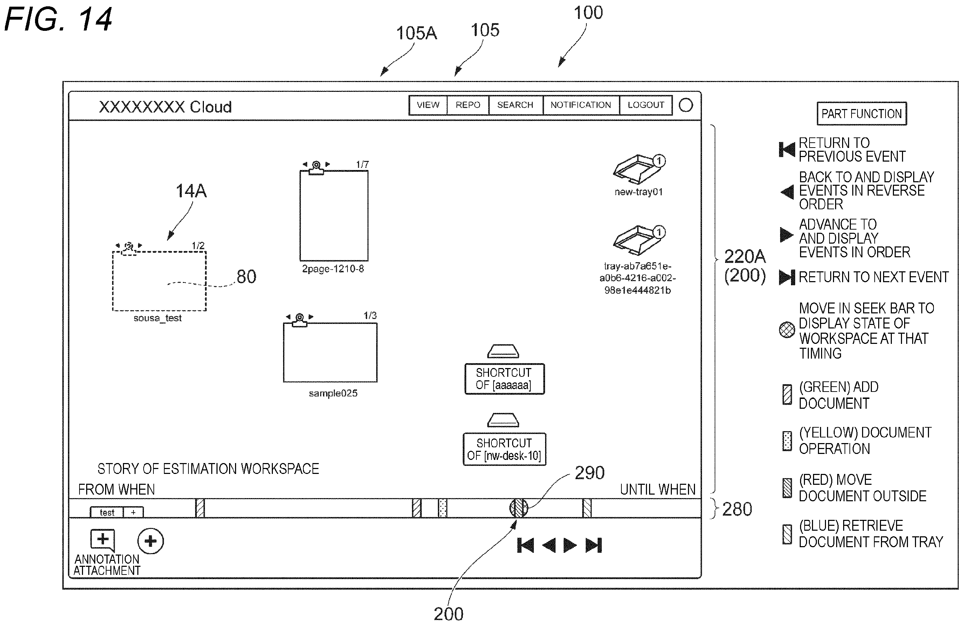

Fig. 14 is a diagram showing another display example in the display device 105 of the terminal apparatus 100.

This display example shows a display example of a case where the moving body 290 reaches a display portion of the instruction receiving element 200.

In the present exemplary embodiment, when the moving body 290 moves by itself and the moving body 290 reaches the display portion of the instruction receiving element 200, a display showing the content of the operation corresponding to the instruction receiving element 200 reached by the moving body 290 is performed.

In the present exemplary embodiment, each of the instruction receiving elements 200 is displayed side by side in order based on the times when operations corresponding to the instruction receiving elements 200 are performed.

When the moving body 290 moving in the element region 280 in which each of the instruction receiving elements 200 is displayed side by side reaches the display portion of each instruction receiving element 200, the CPU 111 displays the content of the operation corresponding to each instruction receiving element 200 reached by the moving body 290.

In the example shown in Fig. 14, a case where the operation corresponding to the instruction receiving element 200 reached by the moving body 290 is an operation of moving the document 80 to the outside is illustrated. In other words, a case where it is an operation of moving the document 80 to another display region 220 is illustrated.

In this display example, as shown by a reference numeral 14A, a display showing that "it is an operation of moving the document 80 to the outside" is performed to perform a display showing that the operation corresponding to the instruction receiving element 200 reached by the moving body 290 is the movement of the document 80.

Specifically, in this display example, the document 80 subjected to the operation corresponding to the instruction receiving element 200 reached by the moving body 290 is displayed by a dotted line, and the display showing that the operation corresponding to the instruction receiving element 200 reached by the moving body 290 is the movement of the document 80 is performed.

In the present exemplary embodiment, the color of the instruction receiving element 200 reached by the moving body 290 is red, and also by referring to the color of the instruction receiving element 200, it is clear that the operation corresponding to the instruction receiving element 200 reached by the moving body 290 is the movement of the document 80.

In this display example, by displaying the document 80 with a dotted line, the document 80 subjected to the operation corresponding to the instruction receiving element 200 reached by the moving body 290 is clarified.

In addition, in this display example, by displaying the document 80 with a dotted line, it is displayed that the document 80 is no longer present there to perform the display showing that the operation corresponding to the instruction receiving element 200 reached by the moving body 290 is the movement of the document 80.

The display showing that "it is the movement of the document 80" is not limited to this, and character information called "movement" may be displayed, or a dedicated image that shows the movement may be displayed to perform the display showing that "it is the movement of the document 80".

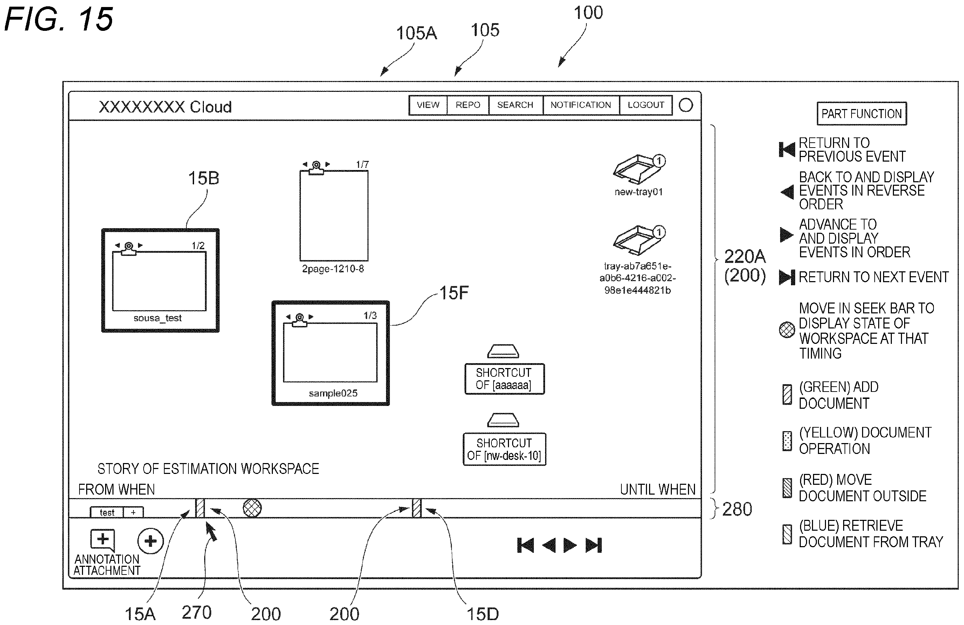

Fig. 15 is a diagram showing another display example in the display device 105 of the terminal apparatus 100.

In this display example shown in Fig. 15, a display example of a case where the user double-clicks on the instruction receiving element 200 shown by a reference numeral 15A and selects the instruction receiving element 200 shown by the reference numeral 15A is shown.

In the present exemplary embodiment, when the user double-clicks to select this instruction receiving element 200, only the instruction receiving elements 200 representing the same type of the operation as the operation corresponding to this instruction receiving element 200 are displayed.

In other words, when the user performs a specific operation such as double-clicking to select this instruction receiving element 200, only this instruction receiving element 200 and other instruction receiving elements 200 associated with the same type of the operation as the operation corresponding to this instruction receiving element 200 are displayed.

Specifically, this display example illustrates a case where the user selects the instruction receiving element 200 corresponding to the addition of the document 80, and in this case, only the instruction receiving element 200 corresponding to the addition of the document 80 are displayed. Specifically, in this example, only the instruction receiving elements 200 in green are displayed.

In this case, only the instruction receiving elements 200 corresponding to one type are displayed in the element region 280.

Further, in this display example shown in Fig. 15, a display for specifying the document 80 subjected to the operations corresponding to each instruction receiving element 200 is performed with corresponding to each of the displayed instruction receiving elements 200.

Specifically, in this example, a square frame shown by a reference numeral 15B is displayed as a display that specifies the document 80 subjected to the operation corresponding to the instruction receiving element 200 shown by the reference numeral 15A. In this example, a square frame shown by a reference numeral 15F is displayed as a display that specifies the document 80 subjected to the operation corresponding to the instruction receiving element 200 shown by a reference numeral 15D.

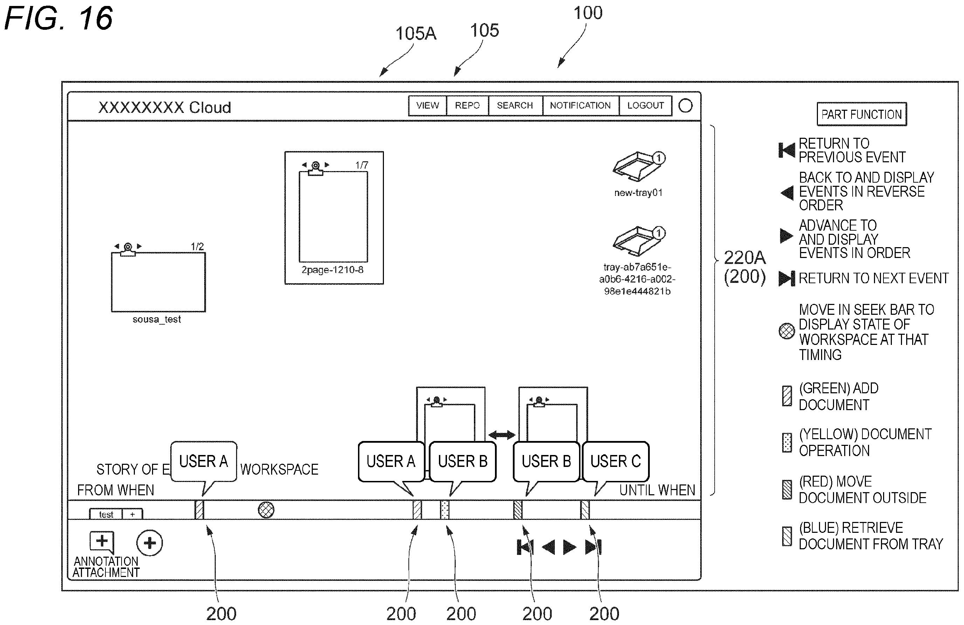

Fig. 16 is a diagram showing another display example in the display device 105 of the terminal apparatus 100.

In this display example, the plural instruction receiving elements 200 are displayed in a distinguishable manner according to the persons who performed the operations.

More specifically, in this display example, information about each person who performed the operations associated with the instruction receiving elements 200 is displayed for each instruction receiving element 200.

In order to display the plural instruction receiving elements 200 in a distinguishable manner, as in this display example, information may be added to each of the instruction receiving elements 200, such as adding and displaying the information about each person who performed the operations.

The display example shown in Fig. 16 shows a case where the information about each person who performed the operations is displayed for all of the instruction receiving elements 200 as an example.

By the way, not limited to this, the information about this user may be displayed in association with only the instruction receiving elements 200 corresponding to the operations performed by some users.

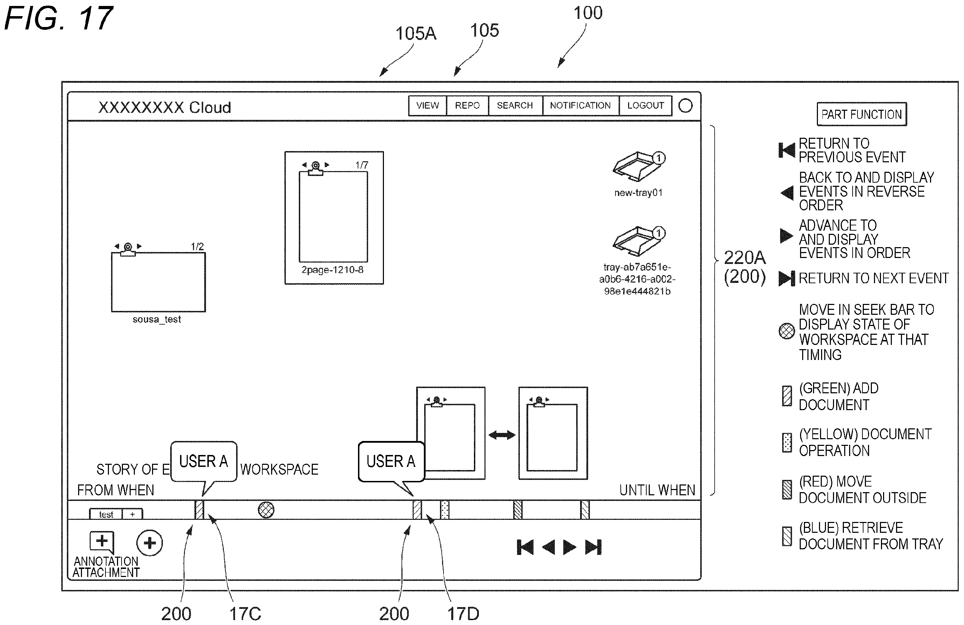

Specifically, for example, a display shown in Fig. 17 (a diagram showing another display example in the display device 105 of the terminal apparatus 100) may be performed.

In the display example shown in Fig. 17, information about user A is displayed in a state of being associated with only the instruction receiving elements 200 corresponding to the operations performed by the user A.

In other words, the operations corresponding to the instruction receiving elements 200 shown by reference numerals 17C and 17D in Fig. 17 are performed by the user A, and in this example, the information about the user A is displayed in a state of being associated with only the instruction receiving elements 200 shown by the reference numerals 17C and 17D.

In this case, the instruction receiving elements 200 other than the instruction receiving element 200 with which the user information is associated may be hidden. More specifically, the instruction receiving elements 200 other than the instruction receiving elements 200 with which the information about the user A is associated may be hidden.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing system comprising a processor configured to:
display a plurality of instruction receiving elements each of which is provided for receiving an instruction to display a content of an operation that was performed on a document displayed in a display region;
display a state of the display region at a time point corresponding to an instruction receiving element selected by a user among the plurality of instruction receiving elements; and
display the plurality of instruction receiving elements in a distinguishable manner according to the content of the operation.

2. The information processing system according to claim 1, wherein
the processor is configured to display the plurality of instruction receiving elements in a distinguishable manner according to a type of the operation.

3. The information processing system according to claim 1, wherein
the processor is configured to display an instruction receiving element corresponding to a content of a specific operation among the plurality of instruction receiving elements, and to hide an instruction receiving element other than the instruction receiving element corresponding to the content of the specific operation among the plurality of instruction receiving elements.

4. The information processing system according to claim 1, wherein
the processor is configured to display the plurality of instruction receiving elements in a distinguishable manner according to a person that performed the operation.

5. The information processing system according to claim 1, wherein
the processor is configured to display the plurality of instruction receiving elements in a distinguishable manner according to an object on which the operation was performed.

6. The information processing system according to claim 5, wherein,
in response to the document displayed in the display region being selected, the processor is configured to display an instruction receiving element whose target of the operation is the selected document in a distinguishable manner.

7. The information processing system according to claim 6, wherein
the processor is configured to further display an indication of a person that performed the operation corresponding to the instruction receiving element.

8. The information processing system according to claim 1, wherein
the processor is configured to display, in the display region, an indication of a target document of the operation corresponding to the instruction receiving element selected.

9. The information processing system according to claim 8, wherein
the processor is configured to display, at a portion at which the target document is displayed in the display region, an image to indicate the operation target document is a document subjected to the operation corresponding to the instruction receiving element selected as the indication of the target document of the operation.

10. The information processing system according to claim 1, wherein
the processor is configured to display an indication of a change in a content of a target document, the target document being a document subjected to the operation corresponding to the instruction receiving element selected.

11. The information processing system according to claim 10, wherein
the processor is configured to display, as the indication of the change in the content, information about the target document before the change in the content and information about the target document after the change in the content.

12. The information processing system according to claim 1, wherein,
in response to a storage image displayed in the display region being selected by the user, the processor is configured to display an indication of an instruction receiving element corresponding to an operation related to the storage image and an indication that an operation corresponding to the instruction receiving element is an operation related to the storage image, the storage image being an image of a storage of a document.

13. The information processing system according to claim 1, wherein
the plurality of instruction receiving elements are displayed in order in a display portion based on a time point when the operation corresponding to each of the plurality of instruction receiving elements is performed, and
in response to a moving body that is configured to move in the display portion reaching a portion where an instruction receiving element among the plurality of instruction receiving elements, the processor is configured to display the content of the operation corresponding to the instruction receiving element displayed at the portion.

14. The information processing system according to claim 1, wherein,
in a case where the operation corresponding to the instruction receiving element selected is an operation of moving the document displayed in the display region, the processor is configured to display information about a movement of the document in the display region as the content of the operation corresponding to the instruction receiving element selected.

15. An information processing method comprising:
displaying a plurality of instruction receiving elements each of which is provided for receiving an instruction to display a content of an operation that was performed on a document displayed in a display region;
displaying a state of the display region at a time point corresponding to an instruction receiving element selected by a user among the plurality of instruction receiving elements; and
displaying the plurality of instruction receiving elements in a distinguishable manner according to the content of the operation.

16. A program causing a computer to execute a process, the process comprising:
displaying a plurality of instruction receiving elements each of which is provided for receiving an instruction to display a content of an operation that was performed on a document displayed in a display region;
displaying a state of the display region at a time point corresponding to an instruction receiving element selected by a user among the plurality of instruction receiving elements; and
displaying the plurality of instruction receiving elements in a distinguishable manner according to the content of the operation.
